# EUROPEAN PATENT APPLICATION

(11) **EP 0 719 832 A2**
(43) Date of publication of application: **03.07.1996**
(21) Application number: 95308397.9
(22) Date of filing: 22.11.1995
(51) Int. Cl.: C08L 71/12, C08L 23/02, C08K 5/524

(54) **Thermoplastic compositions containing polyphenylene ether resin and polyolefins**

(30) Priority: 30.12.1994 US 367372
(71) Applicant: GENERAL ELECTRIC COMPANY, Schenectady, NY 12345 (US)
(72) Inventor: Lee, Gim Fun, Jr., Albany, New York 12203 (US)
(74) Representative: Szary, Anne Catherine

(57) **Abstract**

A rigid moldable thermoplastic resin composition having improved resistance to delamination upon impact and improved impact resistance having in admixture a polyphenylene ether resin, a polyolefin, an essentially hydrogenated elastomeric block copolymer and a particular phosphite which may be an alkyl phosphite, an aryl-alkyl phosphite, an alkyl-aryl phosphite, or mixtures thereof. A particular composition is a polyphenylene ether resin, a polyethylene, an essentially hydrogenated styrene -(ethylene-butylene)- styrene elastomeric copolymer and tridecyl phosphite.

## Description

This invention is directed to particular thermoplastic polyphenylene ether resin compositions having improved delamination resistance and improved impact resistance. More particularly, the composition of this invention is a polyphenylene ether composition containing a polyolefin, an essentially saturated block copolymer, and a particular amount of phosphite.

Polyphenylene ether resins have become widely accepted in the plastics industry because of its desirable physical and chemical properties, such as high heat resistance and dimensional stability.

Polyphenylene ether resin compositions sometimes include polyolefins, and exhibit improved impact strength and chemical resistance. Reference is therefore made here to U.S. Patent 5,166,264 issued November 24, 1992 (G. Lee, Jr. and J. Yates III), and U.S. Patent Application S.N. 395,831, filed August 18, 1989 (G. Lee, Jr.), both of which are assigned to the assignee of the present application.

In co-pending U.S. Patent Applications SN07/883446 filed May 15, 1992 and SN07/996,356 filed December 23, 1992 Attorney Dockets 8N8535 and 8CN8626, respectively, both by G. Lee, Jr., there are disclosed combinations of polyphenylene ether resins with certain elastomeric multiblock copolymers and other additives including polyolefins and phosphites, flame retardants, stabilizers, fillers and reinforcing agents. The compositions as reported therein have improved flexibility and elongation.

While the polyolefins provide increased properties such as impact strength and chemical resistance, there is still a further need to improve impact strength and, in particular, resistance to delamination upon impact. With multi-component systems, particularly compositions containing polyolefins, delamination can be a problem resulting in molded articles being unacceptable in applications where delamination on impact occurs.

### SUMMARY OF THE INVENTION

It has now been surprisingly discovered that a particular known additive, when employed with polyphenylene ether resin compositions in certain specific amounts, results in a molded article having reduced delamination and improved impact resistance. The discovery of the present invention is a rigid, moldable thermoplastic composition comprising a polyphenylene ether resin, a block copolymer, a polyolefin, and a phosphite in certain specific proportions. The phosphite employed herein is an alkyl, an aryl-alkyl, and alkyl-aryl monophosphite or diphosphite or triphosphite, or mixtures thereof. The block copolymers may be any of the essentially saturated or hydrogenated diblock, triblock copolymers or radial teleblock copolymers or blends of the block copolymers.

The polyolefins that can be employed in the practice of this invention may be any of the known polyolefins.

### DETAILED DESCRIPTION OF THE INVENTION

Polyphenylene ether homopolymer (PPE), employed in the practice of this invention, is a well known class of synthetic polymers as are their methods of preparation. Representative of PPE are those which comprise a plurality of recurring chain structural units having the formula: 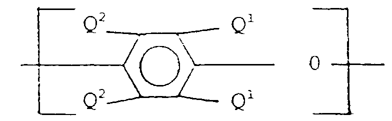 wherein each Q¹ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, halalkyl, hydrocarbonoxy or halohydrocarbonoxy as defined for Q¹. The term "halogen" as used herein means chlorine, bromine, fluorine, or iodine.

Examples of primary lower alkyl groups are methyl, ethyl, n-propyl, n-butyl, isobutyl, n-amyl, isoamyl, 2-methylpentyl, n-hexyl, 2,3-dimethyl-butyl, 2-, 3-, 4-methylpentyl, and the corresponding heptyl groups. Examples of secondary lower alkyl groups are isopropyl, sec-butyl and 3-pentyl. Preferably, any alkyl radicals are straight chain, rather than branched. Most often, each Q¹ is alkyl or phenyl, especially C₁₋₄ alkyl, and each Q² is hydrogen.

Both PPE homopolymer and PPE copolymer are included. Representative homopolymers are those containing, for example, 2,6-dimethyl-1, 4-phenylene ether units. Representative copolymers include random copolymers containing such units in combination with, for example, 2,3,6-trimethyl-1, 4-phenylene ether units. Many suitable random copolymers, as well as homopolymers, are disclosed in the patent literature, see for example Hay, U.S. Patents 3,306,874; 3,306,875 and 3,432,469, Geln Staaloff, U.S. Patents 3,257,357 and 3,257,358; Van Dort, U.S. Patent 3,365,422, Bennett and Cooper, U.S. Patents 3,639,656, 3,642,699, 3,733,299, 3,838,102, 3,661,848, and 4,092,294; Olander, U.S. Patent 4,083,838; White et. al. U.S. Patent 4,806,602; and Brown et. al. U.S. Patent 4,806,297. All of these patents are incorporated herein by reference.

Also included for use in the compositions of the invention are PPE resins containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and like polymers. The product may contain both grafted and/or ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent, provided substantial proportions of free hydroxy groups remain present. Illustrative coupling agents are low molecular weight polycarbonates, quinones, heterocycles, and formals.

The PPE homopolymers employed herein advantageously have a number average molecular weight (Mₙ) within the range of about 3,000 - 40,000 and a weight average molecular weight (M_{w}) within the range of about 20,000 - 80,000, as determined by gel permeation chromatography. Their intrinsic viscosity is most often in the range of about 0.15 to about 0.6 deciliters/gram (dl/g), as measured in chloroform at 25°C.

The PPE's are typically prepared by the oxidative coupling of at least one corresponding monohydroxyaromatic compound. Particularly useful and readily available monhydroxyaromatic compounds are 2,6-xylenol (wherein each Q¹ is methyl and each Q² is hydrogen), whereupon the polymer may be characterized as a poly(2,6-dimethyl-1, 4-phenylene) ether, and a poly(2,3,6-trimethyl-1,4 phenylene) ether (wherein each Q¹ and one Q² is methyl and the other Q², is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A class of preferred catalyst systems consists of those containing a copper compound. Such catalysts are disclosed, for example, in U.S. Patents 3,306,874, 3,306,875, 3,914,266, and 4,028,341, all of which are incorporated herein by reference. They are usually combinations of cuprous or cupric ions, halide (i.e., chloride, bromide or iodide) ions and at least one amine.

As another example, coupled PPE polymers may also be used in which the coupling agent is reacted with the hydroxy groups of two PPE chains to produce a higher molecular weight polymer.

In some embodiments, a polystyrene homopolymer or random copolymer resin may be included in the composition with PPE. These materials, which are very compatible with the PPE homopolymer, are known in the art and described, for example, in U.S. Patents 3,383,435; 4,189,411; and 4,242,363, all are incorporated herein by reference. Illustrative resins of this type are polystyrene, polyalpha-methyl styrene, poly-para-methyl styrene, polychlorostyrene, brominated polymers (e.g., those formed from dibromostyrene monomer), as well as styrene polymers modified by admixture or interpolymer-ization with natural or synthetic elastomeric materials, e.g., polybutadiene, polyisoprene, butyl rubber, EPDM rubber, and the like. Also contemplated are styreneacrylonitrile copolymers (SAN), acrylate-styreneacrylonitrile terpolymers (ASA), and styreneacrylonitrile-butadiene terpolymers (ABS). Special mention is made of rubber-modified styrene polymers ("high impact polystyrene"), which are frequently used in conjunction with PPE to enhance processing and impact strength and is the preferred rubber-modified styrene to be employed with the PPE homopolymer. These high impact polystyrenes are generally prepared by the copolymerization of polybutadiene and a styrene monomer.

The amount of styrene resin, when present (i.e., the amount of homopolymer, copolymer, or mixture as described above), is usually at least 1% by weight and about 1% to about 75% by weight, and preferably, about 2% by weight to about 60% by weight, based on the weight of the entire composition.

The amount of PPE resin employed in the practice of the invention is sufficient to provide a rigid moldable thermoplastic composition. Preferably the PPE is employed in an amount of from about 60 parts by weight to about 85 parts by weight based on the total weight of the composition without reinforcing material or fillers.

It will be apparent to those skilled in the art from the foregoing that the PPE contemplated for use in the compositions of the present invention include all those presently known, irrespectively of variations in structural units or ancillary chemical features. As used in this invention, PPE resin means PPE homopolymer, PPE copolymer, or a blend thereof, or a blend of PPE homopolymer and/or copolymer with a styrene polymer as described above.

The block copolymer component that is employed in the present invention is a A-B-A' block copolymer (triblock), an A-B block copolymer (diblock), a teleblock copolymer or blends thereof. In the A-B-A' triblock copolymer structure of this invention, the A and A' are polymerized vinyl aromatic hydrocarbon blocks, and B is an ethylene-alkylene block derived from at least one polymerized conjugated diene. In preferred embodiments, the block copolymers preferably contain between about 15% and 50% by weight of vinyl aromatics. The A and A' block each have an average molecular weight, preferably number average molecular weight, in the range of about 3,000 to about 20,000 and preferably about 5,000 to about 15,000.

In preferred embodiments of this invention, A and A' are polymers independently derived from the group of monomers consisting of styrene, alpha-methyl styrene, para-methyl styrene, vinyl toluene, vinyl xylene, vinyl naphthalene, chlorostyrene, bromostyrene, dibromostyrene, and combinations thereof. Styrene monomer is the preferred monomer.

The center block B of the block copolymer A-B-A' should be almost completely hydrogenated, i.e., the average unsaturation of the copolymer should be reduced to at least about 20% of its original value or less. In more preferred embodiments, the average unsaturation will be reduced to less than about 10%, and most preferably, less than about 5% of its original value. Methods for accomplishing the hydrogenation of the B block are known in the art.

The B block component of the triblock copolymer is an ethylene-alkylene component and may be either a linear or a branched block component. The B block component is preferably derived from a hydrogenated diene monomer. Examples of such ethylene-alkylene block components are ethylene-propylene, ethylene-butylene, ethylene-hexene, ethylene-pentene, etc. Preferably, the center block B is derived from at least one conjugated diene such as 1,3-butadiene. The average molecular weight, preferably number average molecular weight, of the B block should be in the range of about 25,000 to about 150,000, and most preferably, in the range of about 50,000 to about 125,000.

An especially preferred triblock copolymer that may be employed in this invention comprises blocks of styrene and poly-hydrogenated polybutadiene within the above-prescribed molecular weight ranges, and is often referred to as "SEBS" (styrene-(ethylene-butylene)-styrene. Commercial examples of a suitable material are the linear KRATON® G-1650, G-1651 or G-1652 thermoplastic rubbers, available from Shell Chemical Company.

The elastomeric diblock copolymer that may be employed herein has the structure A-B wherein A is a polymerized vinyl aromatic hydrocarbon block having an average molecular weight, preferably number average molecular weight, of about 3,000 to about 45,000, and preferably, about 5,000 to about 35,000. The B block component of the elastomeric diblock copolymer is an ethylene-alkylene copolymer having an average molecular weight, preferably number average molecular weight, of about 25,000 to about 150,000, and preferably about 30,000 to about 100,000. The alkylene portion of the ethylene-alkylene component of the diblock is either linear or branched block component and is preferably derived from a diene monomer or a hydrogenated diene monomer. Examples of such diblock copolymers are ethylene-propylene, ethylene-butylene, ethylene-hexene, ethylene-pentene, etc. Preferably, the B block component is derived from at least one conjugated diene such as 1,3-butadiene.

As stated previously, radial teleblock copolymers may also be employed herein. The "teleblock" is used to designate copolymers with terminal block segments of one of the monomers used to produce them such as in this case the terminal blocks will be vinyl aromatic from styrene. "Radial" means a network in which the polystyrene blocks make the rubber thermoplastic and association provides a network of plastic areas connected by flexible diene rubber blocks so the material has excellent mechanical properties without vulcanization. The radial teleblock polymers soften and flow with heat and therefore can be molded and extruded in the same manner as other thermoplastic materials. They can be remolded repeatedly without loss in properties.

The block copolymer blend that may be employed herein comprises in admixture from about 75 to about 25 weight percent of the triblock component of the blend, and preferably about 70 to about 30 weight percent thereof, and the diblock component of the blend comprises, correspondingly, about 25 to about 75 weight percent of the diblock component of the blend, and preferably about 30 weight percent to about 70 weight percent thereof. The blend may also include blends of the teleblock copolymer with the diblock or triblock copolymer or a blend of all three block copolymers.

The level of the block copolymer present in the composition of this invention depends on a variety of factors, such as the particular type of PPE resin used, the contemplated end use of the product, and the presence or absence of other additives in the composition. In preferred embodiments, the block copolymer is employed at a level in the range of about 5 parts by weight to about 20 parts by weight, based on the weight of the total weight of the composition without fillers or reinforcing agents. In more preferred embodiments, the level is about 5 parts by weight to about 15 parts by weight, again based on the total weight of composition without fillers or reinforcing agents.

The preparation of block copolymers, i.e., the triblock, diblock or teleblock copolymers, of the type used in the present invention is known in the art. For example, one technique involves the successive polymerization of the monomers in solution to the presence of a monolithium hydrocarbon initiator. Further aspects of the preparation of these polymers can be found in European Patent 95,098; in U.S. Patents 3,113,986; 3,432,323; 3,700,633; and 4,167,507, in the U.S. Application of Christian Bailly and William R. Haaf, S.N. 407,600, filed September 15, 1989; in German Public Disclosure 1,222,260; and in German Letters of Disclosure 2,013,263, the contents of all of these references being incorporated herein by reference.

The polyolefins that may be employed in the practice of this invention are polyethylene, polypropylene, poly-isobutylene, copolymers of ethylene and propylene, copolymers of ethylene and organic esters such as ethylene vinyl acetate, ethylene ethyl acrylate, ethylene methyl acrylate, and the like, as well as mixtures of any polyolefins. The materials themselves are known in the art, as are methods for making them.

Preferred polyolefins are polyethylene, polypropylene, and polybutylene. Especially preferred are very low density polyethylene (VLDPE), low density poly-ethylene (LDPE), linear low density polyethylene (LLDPE), medium density polyethylene (MDPE), high density polyethylene (HDPE), high impact (copolymer) poly-propylene, or combinations of any of the above.

A suitable level of polyolefin is about 3 parts by weight to about 75 parts by weight, based on the weight of the composition without fillers or reinforcing agents. A preferred level of polyolefin is about 3 parts by weight about 30 parts by weight, and a most preferred level is about 10 parts by weight to about 15 parts by weight.

Examples of suitable organic phosphates that may be employed in the practice of this invention as flame retardant or plasticizer include phenyl bisdodecyl phosphate, ethyldiphenyl phosphate, tri-(nonylphenyl) phosphate, tricresyl phosphate, triphenyl phosphate, alkylated derivatives of triphenyl phosphate, dibutylphenyl phosphate, 2-ethylhexyldiphenyl phosphate, as well as mixtures of any of these materials. Also possible and sometimes preferred for use are di and poly phosphate compounds, such as those described in U.K. Patent Application GB 2,043,083A of William Haaf et. al., and in U.S. Patent Application S.N. (Attorney Docket Number 8CN-8525, 335-2239), filed July 11, 1990 as a continuation application of S.N. 429,165, filed October 30, 1989 for V. Abolins, J. Betts, and F. Holub, the contents of which are incorporated herein by reference. Examples of these materials are bisdiphenyl phosphates of resorcinol or hydroquincne, as well as mixtures which comprise such phosphates. Other suitable phosphates are taught in U.S. Patent 4,900,769 of V. Abolins et. al., incorporated herein by reference. Triarylphosphates in admixture with alkylated aryl phosphates are often preferred. However, a most preferred phosphate is resorcinol diphosphate.

The critical feature of the present invention is employing a particular amount of a particular phosphite additive in conjunction with certain ratios of block copolymer to polyolefin and certain specific molecular weight PPE rein as determined by intrinsic viscosity. The phosphite additive is either an alkyl, an aryl-alkyl, an alkyl-aryl monophosphite or diphosphite or tri-phosphite, or mixtures thereof. Examples of suitable phosphites that may be employed in the practice of this invention are tridecyl phosphite, and bis(2,4-di-5-butyphenyl) pentaerythritol diphosphite (commercially available as ULTRANOX® 626 or ULTRANOX® 624). The preferred phosphite is tridecylphosphite.

The critical amount of the particular phosphite is at least two parts based on the parts by weight of the composition without fillers, with the maximum amount being that which does not affect other properties of the composition, such as impact, flame retardancy, surface quality, etc. Preferably, the amount ranges from about 2 parts to about 15 parts by weight, and particularly 2 to about 10 parts by weight.

While the above phosphites are known additives to polymer systems, they are added in small amounts for stabilization purposes. The surprising and unexpected discovery is that when employing the above phosphites in an amount of at least about 2 parts by weight, in conjunction with the particular ratios of block copolymer to polyolefin and the PPE intrinsic viscosities as set forth above, there is a reduction in delamination of a molded article as determined by Dynatup impact testing and an increase in impact resistance as determined by Izod impact testing.

Various other additives may be included in the compositions of this invention, their utility being, of course, dependent in part on the contemplated end use for the compositions. Non-limiting examples of these additives include reinforcing agents or fillers such as fibrous glass, graphite whiskers, titanium dioxide, silica, glass fiber, silicon carbide whiskers, carbon fibers, clay, talc, mica and the calcium carbonate; antioxidants; mold release agents; pigments; dyes; heat stabilizers; light stabilizers; processing stabilizers; abrasion resistance compounds; and the like, as well as flame retardants and/or plasticizers. These additives are usually included in effective amounts of between about 1 part and 50 parts by weight of the total composition.

When employing a flame retardant such as a tri(aryl) phosphate as described in U.S. Patent 4,945,018, part of the flame retardant can be replaced with the phosphite additive of this invention and may still retain good flame retardance.

The compositions of the invention may be prepared by conventional blending techniques such as by melt-blending the ingredients. In a preferred process, some of the ingredients are combined separately as pre-mix blends and then melt blended and extruded from a single or twin screw extruder. For example, the polyphenylene ether composition of this invention may be melt blended and extruded into a processable form. The processable form can then be injection molded or compression molded.

In another preferred process, the ingredients, including optional ingredients, are first preblended together. The preblended composition is then melt extruded from a single or twin screw extruder. The extrudate may then be cooled (water quench for example) and then pelletized which can then be molded.

The following examples are provided to illustrate various embodiments of this invention. They are for the purpose of illustration only, and should not be regarded as limiting the invention to any of the specific materials or conditions described therein.

### EXAMPLE 1

The materials employed in the Examples as component parts were as follows:

Polyphenylene ether (PPE) -Poly(2,6-dimethyl-1,4-phenylene) ether, having an intrinsic viscosity as set forth in the Tables and determined as deciliters per gram (dl/g) as measured in chloroform at 25°C.

KRATON® G-1651 (KG-1651) - Linear styrene(ethylene-butylene) -styrene triblock rubber copolymer, available from Shell Chemical Company, having a total average molecular weight of about 174,000, with each styrene block having an average molecular weight of about 29,000 and the ethylene-butylene block having an average molecular weight of about 116,000.

Flame Retardant (71-B) - Mixture of tri(aryl) phosphate and alkylated derivatives thereof as described in U.S. Patent 4,945,018.

Polyolefin PE (MN-722) - A low density polyethylene.

Polyolefin LLDPE - A linear low density polyethylene.

Phosphite (Weston TDP) - tridecyl phosphite (GE Specialty Chemicals, Inc.).

Where reported, the following physical test procedures were carried out:

Dynatup Impact Testing - Test procedure in accordance with ASTM test procedure D-3763-86 using Dynatup impact testing equipment by General Research Instruments using a molded simple about 4" in diameter by 1/8" thick.

Izod Impact Testing - Test procedure for measuring notched Izod impact in accordance with ASTM test procedure D256 using 1/8" thick test specimens.

In each Example, as reported in the table below, the component parts were first dry blended for about 30 seconds in a laboratory blender. Each blend was separately extruded in a Werner-Pfleiderer 30mm twin screw extruder at about 275°C. The melt blended extrudate of each Example was quenched in water at room temperature and the pelletized.

The pelletized samples of each Example were then dried in an air circulating at about 125°C for about 4 hours. The samples were then injection molded at about 240°C into the respective test specimens for Dynatup impact and Izod impact testing as described above.

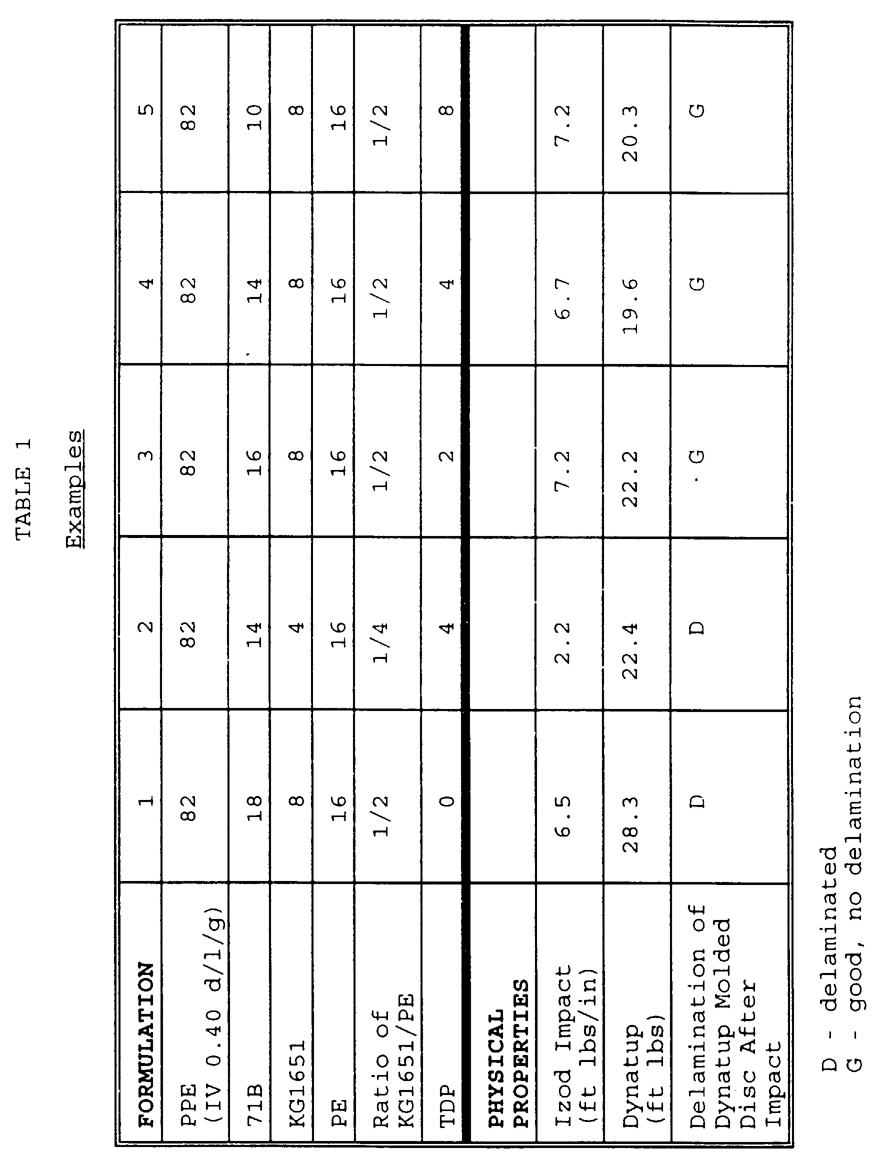

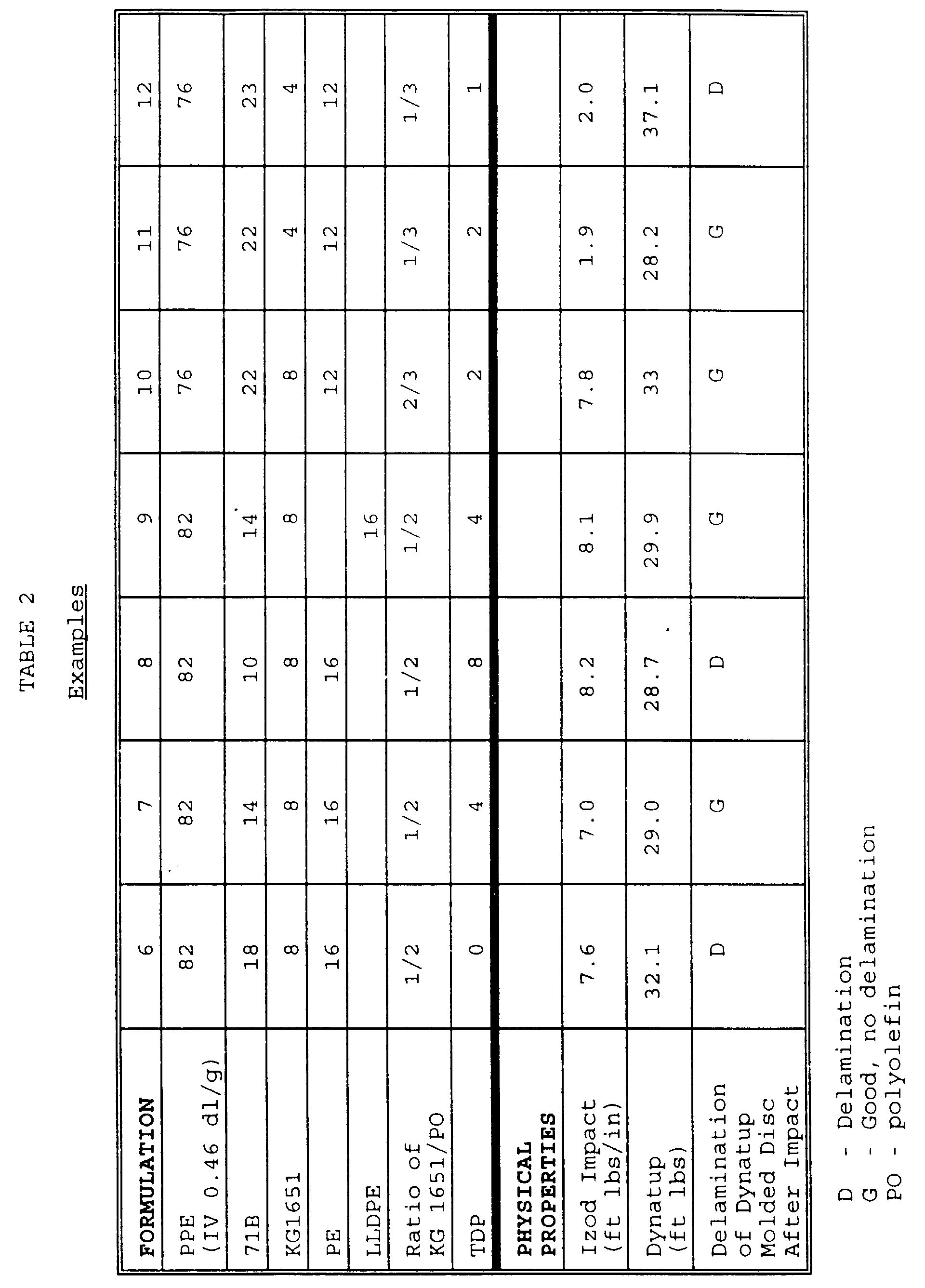

As can be seen from the Examples, when employing the particular amount of phosphite of this invention with the particular ratio of elastomeric block copolymer to polyolefin and the particular PPE intrinsic viscosity, one obtains improved delamination resistance. Please note Example 1 where the Izod impact value is high, but delamination occurs. The high Izod impact may be due to the ratio of KG1651 to PE of 1 to 2. Example 2 clearly shows that with a low ratio of 1 to 4 and even 4 parts of the phosphite, delamination occurred. When comparing Examples 1-5 with Examples 6-12, one can observe the effect of the IV of the PPE. In Examples 3-5 with a PPE having an IV of 0.40 dl/g, high amounts of the phosphite can be employed with higher Izod impact resistance and good delamination resistance. With higher IV PPE (0.46 dl/g), and higher amounts of the phosphite (note Example 9), higher Izod impact resistance is obtained, but delamination occurs.

## Claims

1. Rigid moldable thermoplastic resin compositions having improved resistance to delamination upon impact and improved resistance to impact comprising in admixture polyphenylene ether resins, polyolefins, essentially hydrogenated block copolymers, selected from the group consisting essentially of triblock copolymers, teleblock copolymers and mixtures thereof, and a sufficient amount of phosphites selected from the group consisting of an alkyl, an aryl-alkyl, and an alkyl-aryl monophosphites, diphosphites and triphosphites, wherein in said composition the ratio of block copolymer to polyolefin is not less than 1 to 3.

2. The composition of claim 1 comprising in admixture 60 to about 85 parts by weight of polyphenylene ether resin, 5 to about 20 parts by weight of block copolymer, 1 to about 30 parts by weight of polyolefin and 2 to about 10 parts by weight of phosphite, provided, however, that when the IV of the polyphenylene ether is at least 0.40 dl/g, the phosphite content of the composition is not greater than 4 parts by weight.

3. The composition of claim 2 wherein the ratio of elastomeric copolymer to polyolefin is 1 to 0.5 to 1 to 2.

4. The composition of claim 2 wherein the polyolefin is polyethylene.

5. The composition of claim 2 wherein the phosphite is tridecylphosphite.

6. The composition of claim 2 wherein the elastomeric block copolymer is a diblock copolymer of an AB structure wherein A is polymerized vinyl aromatic hydrocarbon block having an average molecular weight of about 3,000 to about 45,000 and the B component is an ethylene-alkylene copolymer having an average molecular weight of about 25,000 to about 150,000.

7. The composition of claim 6 wherein the diblock copolymer is a styrene (ethylene-propylene) copolymer.

8. The composition of claim 2 wherein the triblock copolymer is an ABA' structure wherein A and A' are polymerized vinyl aromatic hydrocarbon blocks and B is an ethylene-alkylene block derived from at least one polymerized conjugated diene.

9. The composition of claim 8 wherein the triblock copolymer is a styrene - (ethylene-butylene) - styrene block copolymer.
